# EUROPÄISCHE PATENTSCHRIFT

(11) **EP 3 056 813 B1**
(45) Veröffentlichungstag und Bekanntmachung des Hinweises auf die Patenterteilung: **27.11.2019**
(21) Anmeldenummer: 16154683.3
(22) Anmeldetag: 08.02.2016
(51) Int. Cl.: F23M 5/04, F23M 5/00, F23R 3/00

(54) **ABDICHTUNG EINES RANDSPALTS ZWISCHEN EFFUSIONSSCHINDELN EINER GASTURBINENBRENNKAMMER**
SEAL OF AN EDGE GAP BETWEEN EFFUSION SHINGLE OF A GAS TURBINE COMBUSTOR
JOINT POUR UN INTERSTICE MARGINAL ENTRE LES BARDEAUX D'EFFUSION D'UNE CHAMBRE DE COMBUSTION DE TURBINES A GAZ

(30) Priorität: 12.02.2015 DE 102015202570
(43) Veröffentlichungstag der Anmeldung: 17.08.2016
(73) Patentinhaber: Rolls-Royce Deutschland Ltd & Co KG, 15827 Blankenfelde-Mahlow (DE)
(72) Erfinder: STAUFER, Dr. Max, 12103 Berlin (DE)
(74) Vertreter: Hoefer & Partner Patentanwälte mbB

(56) Entgegenhaltungen:
- EP-A1- 1 557 611
- EP-A2- 1 582 699
- EP-A2- 1 591 725
- EP-A2- 2 354 660
- EP-A2- 2 511 481
- EP-A2- 2 549 188
- DE-A1- 19 727 407

## Beschreibung

Die Erfindung bezieht sich auf eine Abdichtung eines Randspalts zwischen Effusionsschindeln einer Gasturbinenbrennkammer und insbesondere auf eine Brennkammer einer Gasturbine gemäß den Merkmalen des Oberbegriffs des Anspruchs 1. Somit bezieht sich die Erfindung auf eine Brennkammer einer Gasturbine mit einer Brennkammerwand, an welcher Effusionsschindeln befestigt sind, welche unter Bildung eines Randspalts aneinandergrenzen, wobei im Bereich des Randspalts eine Dichtung angeordnet ist.

Aus dem Stand der Technik ist es bekannt, dass zwischen benachbarten Effusionsschindeln Randspalte entstehen, welche beispielsweise durch Toleranzen der Effusionsschindeln oder durch unterschiedliche thermische Ausdehnungen verursacht werden. Diese Thematik ist aus dem Stand der Technik bekannt. Dort sind unterschiedliche Dichtungselemente beschrieben, die dazu dienen sollen, den Randspalt gegen Spaltverluste der durch die Effusionsschindeln zu leitenden Kühlluft abzudichten. Weiterhin ist es wünschenswert, den zwischen benachbarten Effusionsschindeln entstehenden Randspalt und die dadurch gebildete Kavität gegen den Eintritt von Heißgas aus der Brennkammer und gegen einen Wärmestrahlungseintrag abzudichten.

Die EP 1 310 735 B1 zeigt eine Konstruktion, bei welcher die Dichtung streifenförmig ausgebildet ist und gegen die Ränder der benachbarten Effusionsschindeln anliegt. Die Dichtung wird durch seitliche Führungen positioniert.

Die US 6,675,586 B2 beschreibt eine Konstruktion, bei welcher eine U-förmige Dichtung verwendet wird, deren zur Brennkammer weisende Schenkel in Nuten der Effusionsschindeln aufgenommen sind.

Die US 7,152,864 B2 zeigt ein Dichtungselement, welches elastisch gegen die zur Brennkammerwand weisenden Ränder der Effusionsschindeln vorgespannt ist. Eine ähnliche Lösung zeigt die US 8,359,865 B2. Dabei wird ein im Wesentlichen U-förmiges Dichtelement zwischen den Effusionsschindeln und der Brennkammerwand geklemmt. Gemäß der US 7,849,694 B2 ist vorgesehen, Dichtungsstreifen in Nuten der Ränder der Effusionsschindeln einzulegen und gegen die Brennkammerwand vorzuspannen.

Als nachteilig bei den vorbekannten Konstruktionen erweist es sich, dass die Dichtungen jeweils durch aufwendige konstruktive Maßnahmen gesichert und positioniert werden müssen und dass sowohl die Herstellung als auch die Montage einen hohen Aufwand erfordern.

Die EP 2 354 660 A2 offenbart ein Dichtungselement für Effusionsschindeln einer Brennkammerwand. Die Effusionsschindeln sind mit einem Abstand zueinander angeordnet. In diesem Abstand ist ein Dichtungselement eingelegt, welches einen U-förmigen Querschnitt mit seitlichen Rippen aufweist. Das Dichtungselement ist so positioniert, dass eine Ausnehmung der Brennkammerwand zur Einleitung von Kühlluft in den Hohlraum des Dichtungselements mündet. Die EP 2 549 188 A2 zeigt ebenfalls diese Konstruktion.

Ferner zeigt die EP 1 591 725 A2 Heißgasdichtungen zum Abdichten eines Spalts in einem Hitzeschildelement.

EP 1 557 611 A1 zeigt eine Verkleidung einer Brennkammer mit einer Strömungsbarriere zwischen Verkleidungselementen.

DE 197 27 407 A1 zeigt ein Hitzeschild mit Prallkühlung und Effusionskühlung, wobei zwischen Rändern von Platten Metalldichtfedern in Nuten angeordnet sind.

Der Erfindung liegt die Aufgabe zugrunde, eine Abdichtung der eingangs genannten Art zu schaffen, welche bei einfachem Aufbau und einfacher, kostengünstiger Herstellbarkeit eine wirksame Abdichtung des Randspalts und eine wirksame thermische Isolierung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist vorgesehen, dass die Effusionsschindeln an ihrem Rand, welcher zur Brennkammerwand weist, zur Bildung eines Dichtraums mit einer sich längs des Randes erstreckenden Abschrägung oder Ausnehmung versehen sind. Eine derartige Abschrägung oder Ausnehmung ist einfach und kostengünstig herstellbar. In dem durch die Abschrägungen der beiden jeweils benachbarten Effusionsschindeln gebildeten Dichtraum ist erfindungsgemäß eine Dichtung eingelegt, welche einen Querschnitt aufweist, welcher zu der Abschrägung oder Ausnehmung des Randes der Effusionsschindeln passend und passgenau gefertigt ist. Die Dichtung weist einen V-förmigen Querschnitt auf, so dass die Dichtung gegen die Abschrägung oder die Oberfläche des Randes der Brennkammerschindel dichtend anlegbar ist. Weiterhin ist vorgesehen, dass die Brennkammerwand mit zumindest einer Ausnehmung versehen ist, welche in den Dichtraum mündet und dazu dient, Kühlluft durch die Brennkammerwand in den Dichtraum zuzuführen. Die Kühlluft bewirkt somit einen Druckaufbau an der der Brennkammerwand zugewandten Seite der Dichtung. Durch diesen Druck wird die Dichtung gegen die Abschrägung oder Ausnehmung des Randes der jeweiligen Effusionsschindel angelegt. Hierdurch ergibt sich auf besonders einfache Weise eine effektive Abdichtung.

Erfindungsgemäß erfolgt somit eine selbstständige Zentrierung und Positionierung der Dichtung. Weiterhin wird die Dichtung durch den durch die Kühlluft aufgebrachten Druck in eine Dichtposition gebracht und in dieser gehalten.

Die erfindungsgemäße Lösung führt somit zu einem effektiven Abdichten des Randspalts und verhindert, dass Heißgas durch den Randspalt auf die Brennkammerwand auftreffen kann. Weiterhin bewirkt die Dichtung eine Abschirmung der Wärmestrahlung und schützt somit die Brennkammerwand.

Die erfindungsgemäße Dichtung braucht nicht, wie beim Stand der Technik, konstruktiv befestigt werden. Vielmehr zentriert sich die Dichtung selbst und wird durch den Überdruck in eine Dichtposition gebracht. Hierdurch vereinfacht sich nicht nur die Herstellung der Brennkammerschindeln sowie der Dichtung, sondern auch die benötigte Montage.

Die erfindungsgemäße Abdichtung weist den weiteren, wesentlichen Vorteil auf, dass bei einem Versagen der Dichtung die Kühlwirkung der durch die Ausnehmung einströmenden Kühlluft dazu führt, dass der Rand der Effusionsschindel gekühlt wird. Dies schützt die Effusionsschindel selbst und verhindert ein Versagen.

Zudem ist es möglich die Dichtung mit Ausnehmungen zu versehen, um eine definierte Menge an Kühlluft zur Ausprägung eines Kühlfilms auf dem Schindelrand zu erlauben.

Erfindungsgemäß ist es somit besonders vorteilhaft, wenn die Dichtung so ausgebildet ist, dass sie dichtend gegen die Abschrägungen oder Ausnehmungen der Ränder der Brennkammerschindeln anlegbar ist.

Die Dichtung kann beispielsweise aus einem Blechmaterial gefertigt werden, so dass sich der Herstellungsaufwand erheblich reduziert.

In günstiger Ausgestaltung der Erfindung ist weiterhin vorgesehen, dass die Dichtung seitliche Schenkel aufweist, welche zwischen dem Rand der Effusionsschindel und der Brennkammerwand angeordnet sind. Hierdurch ist es möglich, zusätzlich eine Abdichtung zwischen der Brennkammerwand und der Effusionsschindel vorzusehen, um ein Austreten von Kühlluft, welche in den Zwischenraum zwischen der Brennkammerwand und der Effusionsschindeln eingeleitet wird, durch den Randspalt zu verhindern.

In bevorzugter Weiterbildung der Erfindung ist vorgesehen, dass die seitlichen Schenkel der Dichtung mit Haltebereichen versehen sind, welche zum formschlüssigen Verklammern mit den Rändern der Effusionsschindeln dienen. Hierdurch wird sichergestellt, dass die Dichtung auch im nicht in Betrieb befindlichen Zustand der Gasturbine exakt positioniert bleibt.

Im Folgenden wird die Erfindung anhand von Ausführungsbeispielen in Verbindung mit der Zeichnung beschrieben. Dabei zeigt:
- Fig. 1: ein Gasturbinentriebwerk zur Verwendung der erfindungsgemäßen Gasturbinenbrennkammer,
- Fig. 2: eine vereinfachte Seiten-Schnittansicht einer Brennkammerwand und benachbarter Effusionsschindeln mit Randspalt und erfindungsgemäßer Dichtung gemäß einem ersten Ausführungsbeispiel,
- Fig. 3: eine Ansicht, analog Fig. 2, eines weiteren Ausführungsbeispiels mit seitlichen Schenkeln, und
- Fig. 4: ein weiteres Ausführungsbeispiel in analoger Darstellung mit seitlichen Haltebereichen.

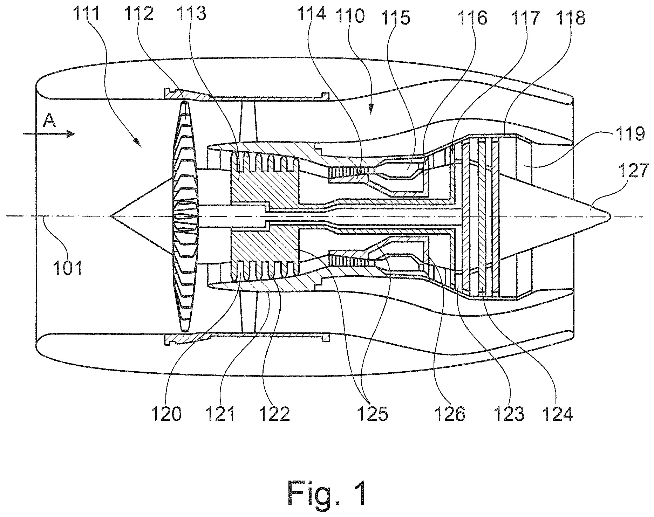

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

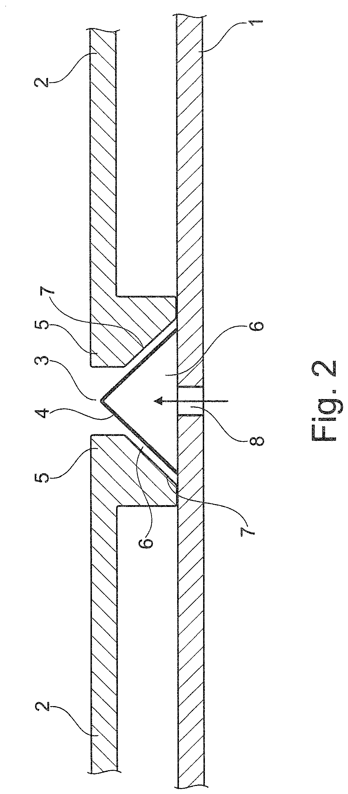

Die Fig. 2 zeigt in vereinfachter Darstellung jeweils eine Brennkammerwand 1. An dieser sind in nicht dargestellter Weise Effusionsschindeln 2 befestigt. Gemäß den Fig. 2 bis 4 weisen die Effusionsschindeln 2 an ihren Rändern 5 einen Abstand auf, so dass ein Randspalt 3 gebildet wird.

Wie insbesondere in Fig. 2 gezeigt, ist die Seite des Randes 5, welche der Brennkammerwand 1 zugewandt ist und sich zu dem Randspalt 3 erstreckt, mit einer Abschrägung versehen, so dass sich, wie aus Fig. 2 ersichtlich ist, ein V-förmiger Querschnitt ergibt.

In einem durch die Abschrägungen 7 gebildeten Dichtraum 6 ist eine längliche oder streifenförmige Dichtung 4 angeordnet, welche aus Blechmaterial gefertigt sein kann und sich längs des Randspalts 3 erstreckt. Die Abschrägung 7 und die V-förmige Kontur der Dichtung 4 sind aufeinander angepasst, so dass die Dichtung 4 dichtend gegen die Flächen der Abschrägungen 7 anlegbar ist.

Die Brennkammerwand 1 weist im Bereich des Randspalts 3 zumindest eine Ausnehmung 8 auf, durch welche Kühlluft in den Dichtraum 6 einleitbar ist. Da die Dichtung 4 dichtend gegen die Abschrägungen 7 anliegt, erfolgt in dem Dichtraum 6 ein Druckaufbau, welcher die Dichtung 4 gegen die Abschrägungen 7 andrückt und positioniert.

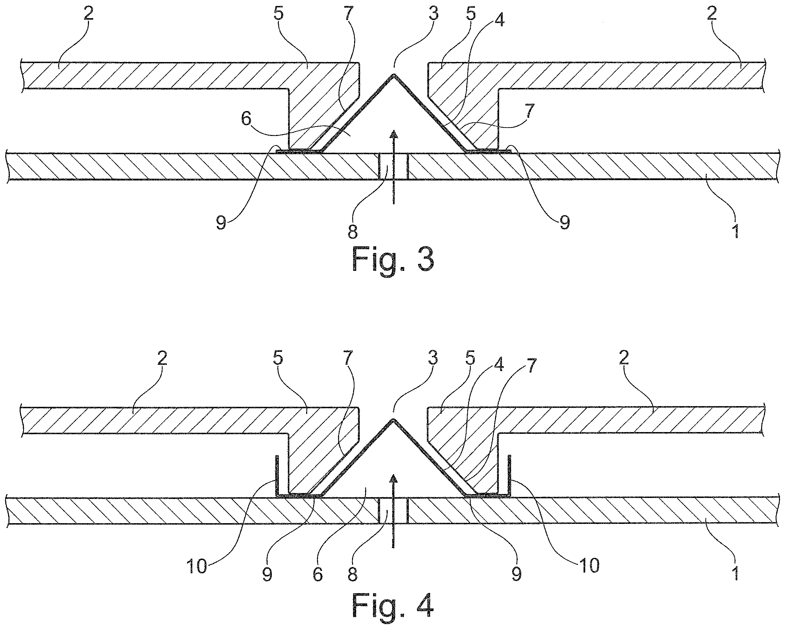

Bei dem in Fig. 3 gezeigten Ausführungsbeispiel weist die Dichtung seitliche Schenkel 9 auf, welche zwischen dem Rand 5 der jeweiligen Effusionsschindel 2 und der Brennkammerwand 1 angeordnet sind. Die Schenkel 9 dienen zur zusätzlichen Abdichtung zwischen dem Rand 5 der Effusionsschindel und der Brennkammerwand 1, um ein Ausströmen von Kühlluft aus dem Zwischenraum zwischen der Brennkammerwarnd 1 und der Effusionsschindel 2 zu verhindern.

Die Fig. 4 zeigt ein weiteres Ausführungsbeispiel analog den Fig. 2 und 3, bei welchem an den äußeren Randbereichen der Schenkel 9 zusätzliche Haltebereiche 10 ausgebildet sind. Diese sind, wie in Fig. 4 ersichtlich ist, nach oben gebogen und dienen zusätzlich zur Halterung der Dichtung 4.

### Bezugszeichenliste:

- 1: Brennkammerwand
- 2: Effusionsschindel
- 3: Randspalt
- 4: Dichtung
- 5: Rand
- 6: Dichtraum
- 7: Abschrägung
- 8: Ausnehmung
- 9: Schenkel
- 10: Haltebereich
- 101: Triebwerksmittelachse
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Kerntriebwerksgehäuse
- 122: Kompressorlaufschaufeln
- 123: Leitschaufeln
- 124: Turbinenschaufeln
- 125: Kompressortrommel oder -scheibe
- 126: Turbinenrotornabe
- 127: Auslasskonus

## Patentansprüche

1. Brennkammer einer Gasturbine mit einer Brennkammerwand (1), an welcher Effusionsschindeln (2) befestigt sind, welche unter Bildung eines Randspalts (3) aneinandergrenzen, wobei im Bereich des Randspalts (3) eine Dichtung (4) angeordnet ist, **dadurch gekennzeichnet, dass** die Effusionsschindeln (2) an einer Seite ihres Randes (5), welcher der Brennkammerwand (1) zugewandt ist, zur Bildung eines Dichtraums (6) mit einer Abschrägung (7) versehen sind, dass in dem Dichtraum (6) eine einen V-förmigen Querschnitt aufweisende Dichtung (4) angeordnet ist, dass der V-förmige Querschnitt und die Abschrägung (7) aufeinander angepasst sind, so dass die Dichtung (4) dichtend gegen die Abschrägungen (7) anlegbar ist, und dass die Brennkammerwand (1) mit zumindest einer Ausnehmung (8), welche in den Dichtraum (6) mündet, zur Durchleitung von Kühlluft durch die Brennkammerwand (1) zu der der Brennkammerwand (1) zugewandten Seite der Dichtung (4) versehen ist, um einen Druckaufbau an der der Brennkammerwand (1) zugewandten Seite der Dichtung (4) zu bewirken, zum Anlegen der Dichtung (4) gegen die Abschrägung (7).

2. Brennkammer nach Anspruch 1, **dadurch gekennzeichnet, dass** die Dichtung (4) aus einem Blechmaterial geformt ist.

3. Brennkammer nach einem der Ansprüche 1 oder 2, **dadurch gekennzeichnet, dass** die Dichtung (4) seitliche Schenkel (9) aufweist, welche zwischen dem Rand (5) der Effusionsschindel (2) und der Brennkammerwand (1) angeordnet sind.

4. Brennkammer nach Anspruch 3, **dadurch gekennzeichnet, dass** die Schenkel (9) mit Haltebereichen (10) zum formschlüssigen Verklammern mit den Rändern (5) der Effusionsschindeln (2) versehen sind.

## Claims

1. Combustion chamber of a gas turbine having a combustion chamber wall (1) on which there are attached effusion shingles (2) that adjoin one another forming an edge gap (3), wherein a seal (4) is arranged in the region of the edge gap (3), **characterized in that** the effusion shingles (2) are provided with a bevel (7) on one side of their edge (5), oriented towards the combustion chamber wall (1), so as to form a sealing space (6), **in that** a seal (4), having a V-shaped cross section, is arranged in the sealing space (6), **in that** the V-shaped cross section and the bevel (7) match one another so that the seal (4) can be pressed against the bevels (7) so as to establish a seal, and **in that** the combustion chamber wall (1) is provided with at least one cutout (8) which opens into the sealing space (6) for the purpose of conveying cooling air through the combustion chamber wall (1) to that side of the seal (4) facing the combustion chamber wall (1), in order to increase the pressure on that side of the seal (4) facing the combustion chamber wall (1) so as to press the seal (4) against the bevel (7).

2. Combustion chamber according to Claim 1, **characterized in that** the seal (4) is made of a sheet material.

3. Combustion chamber according to either of Claims 1 and 2, **characterized in that** the seal (4) has lateral legs (9) which are arranged between the rim (5) of the effusion shingle (2) and the combustion chamber wall (1).

4. Combustion chamber according to Claim 3, **characterized in that** the legs (9) are provided with retaining portions (10) to interlock in a form-fitting manner with the edges (5) of the effusion shingles (2).

## Revendications

1. Chambre de combustion d'une turbine à gaz comprenant une paroi de la chambre de combustion (1) au niveau de laquelle sont fixés des bardeaux d'effusion (2) qui sont juxtaposés en formant un interstice marginal (3), un joint d'étanchéité (4) étant disposé dans la région de l'interstice marginal (3), **caractérisée en ce que** les bardeaux d'effusion (2) sont pourvus d'un chanfreinage (7) au niveau d'un côté de leur bord (5) qui est tourné vers la paroi de la chambre de combustion (1), pour former un espace d'étanchéité (6), **en ce que** dans l'espace d'étanchéité (6) est disposé un joint d'étanchéité (4) présentant une section transversale en forme de V, **en ce que** la section transversale en forme de V et le chanfreinage (7) sont adaptés l'un à l'autre de telle sorte que le joint d'étanchéité (4) puisse être appliqué hermétiquement contre les chanfreinages (7), et **en ce que** la paroi de la chambre de combustion (1) est pourvue d'au moins un évidement (8) qui débouche dans l'espace d'étanchéité (6), pour le passage d'air de refroidissement à travers la paroi de la chambre de combustion (1) vers le côté du joint d'étanchéité (4) tourné vers la paroi de la chambre de combustion (1), afin de provoquer une augmentation de pression au niveau du côté du joint d'étanchéité (4) tourné vers la paroi de la chambre de combustion (1), afin d'appliquer le joint d'étanchéité (4) contre le chanfreinage (7).

2. Chambre de combustion selon la revendication 1, **caractérisée en ce que** le joint d'étanchéité (4) est formé d'un matériau en tôle.

3. Chambre de combustion selon l'une quelconque des revendications 1 ou 2, **caractérisée en ce que** le joint d'étanchéité (4) présente des branches latérales (9) qui sont disposées entre le bord (5) du bardeau d'effusion (2) et la paroi de la chambre de combustion (1).

4. Chambre de combustion selon la revendication 3, **caractérisée en ce que** les branches (9) sont pourvues de régions de retenue (10) pour le serrage par engagement par correspondance de formes avec les bords (5) des bardeaux d'effusion (2).
